(19) Europäisches Patentamt
European Patent Office
Office européen des brevets

(11) **EP 1 873 552 A1**

(12) **EUROPÄISCHE PATENTANMELDUNG**

(43) Veröffentlichungstag:
**02.01.2008 Patentblatt 2008/01**

(51) Int Cl.:
***G01S 7/40*** *(2006.01)*

(21) Anmeldenummer: **07107998.2**

(22) Anmeldetag: **11.05.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **27.06.2006 DE 102006029395**

(71) Anmelder: **ROBERT BOSCH GMBH**
**70442 Stuttgart (DE)**

(72) Erfinder:
• **Leineweber, Thilo**
  **70176 Stuttgart (DE)**
• **Randler, Martin**
  **88090 Immenstaad (DE)**
• **Jordan, Ruediger**
  **70192 Stuttgart (DE)**
• **Schwindt, Oliver**
  **71277 Rutesheim (DE)**
• **Koesters, Iris Nadine**
  **71229 Leonberg (DE)**

(54) **Verfahren und Vorrichtung zur Bestimmung eines Höhen- oder Seitenwinkelfehlers bei einem Umfeldsensor in einem Kraftfahrzeug**

(57) Die Erfindung betrifft ein Verfahren und eine Vorrichtung zur Bestimmung eines Höhenwinkelfehlers (18) bei einem Umfeldsensor (2), der an einem Kraftfahrzeug angeordnet ist. Erfindungsgemäß weist der Umfeldsensor (2) zwei Beschleunigungssensoren (9, 10) auf, deren Wirkungsrichtungen in einem Winkel (15) von 90° zueinander angeordnet sind und die Wirkungsrichtung des ersten Beschleunigungssensors (9) ist in einem Winkel (16) von +45° und die Wirkungsrichtung des zweiten Beschleunigungssensors (10) ist in einem Winkel (17) von -45° zu einer Horizontalen (7) angeordnet. Aufgrund eines Kräfteparallelogramms ist ein Höhenwinkelfehler (18) bestimmbar. Das Verfahren ist auf eine Bestimmung eines Seitenwinkelfehlers übertragbar. Die Vorrichtung ist auf eine Bestimmung eines Seitenwinkelfehlers anwendbar.

Fig. 3

**Beschreibung**

Die Erfindung betrifft ein Verfahren und eine Vorrichtung zur Bestimmung eines Höhen- oder Seitenwinkelfehlers bei einem Umfeldsensor in einem Kraftfahrzeug.

An Kraftfahrzeugen sind Umfeldsensoren wie Radar- oder Lidarsensoren angeordnet, die zur Detektion von vorausfahrenden Kraftfahrzeugen oder stehenden Objekten dienen. Sind diese Umfeldsensoren nachlässig montiert oder schon länger in Betrieb, so treten Winkelfehler zwischen der Fahrzeuglängsachse und der Ausstrahl- und Empfangsrichtung des Sensors sowohl in der Höhe als auch zur Seite auf. Die Höhenwinkelfehler werden auch als vertikale Abweichung oder Dejustage, die Seitenwinkelfehler auch als horizontale Abweichung oder Dejustage bezeichnet. Werden diese Fehler in Rechenoperationen einbezogen und berücksichtigt, so wird dies auch als Fehleraufhebung oder Dejustagekompensation bezeichnet. Die Umfeldsensoren messen Winkel in horizontaler, nicht jedoch in vertikaler Richtung. Die horizontale Dejustage ist über eine Trajektorienverfolgung von stehenden Objekten berechen- und kompensierbar. Eine vertikale Dejustagekompensation ist nur bedingt möglich. Eine aufwändige Technik zur Dejustagekompensation in horizontaler und vertikaler Richtung ist aus der DE 197 48 604 A1 bekannt. Eine vertikale Dejustage kann auch zu falschen horizontalen Winkeln führen, weil das verwendete Antennendiagramm einem Schnitt im Allgemeinen bei 0° vertikaler Dejustage entspricht, mit anderen Worten ausgedrückt: weil das Antennendiagramm bezüglich 0° erzeugt wird und bei zunehmender Abweichung weniger genau zutrifft. Ist der vertikale Dejustagewinkel deutlich von 0 verschieden, ist das Antennendiagramm nur noch begrenzt gültig.

Der Erfindung liegt von daher die Aufgabe zugrunde, eine einfache Vorrichtung anzugeben, mit der eine vertikale und horizontale Dejustage erkennbar und kompensierbar ist.

Diese Aufgabe wird gemäß der Merkmale der nebengeordneten Ansprüche 1 bis 4, 7 und 9 gelöst.

Kern der Erfindung ist die Verwendung von zwei Beschleunigungssensoren im Umfeldsensorgehäuse. Beide Sensoren sind in einem Winkel von 90° zueinander und einmal in einem Winkel von +45° und einmal in einem Winkel von -45° zu einer Horizontalen angeordnet. Das resultierende Summenbeschleunigungssignal aus beiden Sensoren wird mit dem Fahrzeugbeschleunigungssignal verglichen, um die Sensoren abzugleichen. Daraus ergibt sich ein Korrekturfaktor k. Das Differenzsignal wird verwendet, um Abweichungen, englisch auch als Offsets bezeichnet, der Sensoren zu bestimmen. Das Verfahren nutzt dabei das bereits im Fahrzeug verfügbare Fahrzeugbeschleunigungssignal und die Tatsache, dass im normalen Fahrbetrieb sehr häufig eine Beschleunigung anliegt. Aus dem Verhältnis der beiden Sensorsignale zueinander kann der Winkel der Umfeldsensorachse zu einer Fahrzeugachse in vertikaler Richtung bestimmt werden. Das Verfahren kann ebenso übertragen werden für eine Dejustage in horizontaler Richtung. Das Verfahren funktioniert sowohl, wenn die Fahrzeugbeschleunigung aus einem Beschleunigungssensor stammt als auch wenn die Fahrzeugbeschleunigung aus der Fahrgeschwindigkeitsänderung gebildet wird. Im zweiten Fall liegt bei Steigungen die Beschleunigung des Fahrzeugs parallel zur Steigung vor. Die wird durch die Anordnung der Sensoren im Umfeldsensor automatisch kompensiert.

Die Kompensation der vertikalen Dejustage eines nicht vertikal Winkel messenden Sensors kann dadurch erfolgen, dass im Sensor mehrere horizontale Schnitte des Antennendiagramms unter verschiedenen vertikalen Winkeln abgelegt sind, und das jeweils am besten zum vertikalen Dejustagewinkel passende oder auch eine Kombination aus mehreren möglichen Diagrammen für die Signalverarbeitung auswählbar ist.

Zum besseren Verständnis der Erfindung wird nachstehend ein Ausführungsbeispiel der Erfindung näher erläutert.

Es zeigen

Fig. 1 eine schematische Darstellung eines Kraftfahrzeuges mit einem Umfeld- und einem Beschleunigungssensor,

Fig. 2 eine schematische Darstellung des Umfeldsensors mit zwei weiteren Beschleunigungssensoren und

Fig. 3 eine schematische Darstellung des Umfeldsensors mit einem Höhenwinkelfehler $\varphi$ in dem Kraftfahrzeug angeordnet.

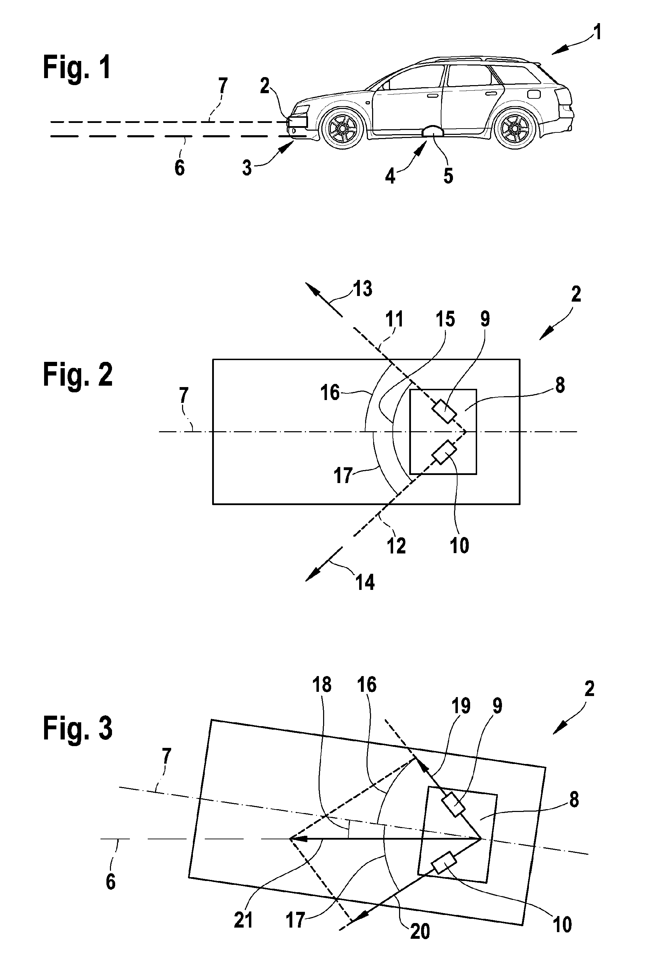

Figur 1 zeigt ein Kraftfahrzeug 1 mit einem Umfeldsensor 2 in einem Frontbereich 3 des Kraftfahrzeugs 1. In einem mittleren Teil 4 des Kraftfahrzeugs 1 ist ein Beschleunigungssensor 5 angeordnet, der die Kraftfahrzeugsbeschleunigung in Richtung einer Kraftfahrzeuglängsachse 6 misst, die bei Geradeausfahrt identisch mit der Fahrtrichtung ist. Der Umfeldsensor 2 ist als Radargerät ausgebildet und sendet eine Radarstrahlung aus, die im Wesentlichen eine Horizontale 7 bestreicht, auch als horizontale Ebene bezeichnet. Die Horizontale 7 ist im idealen Betriebszustand parallel der Fahrtrichtung.

Figur 2 zeigt das Radargerät 2 mit einer Vorrichtung 8, in der zwei weitere Beschleunigungssensoren 9 und 10 angeordnet sind. Der erste Sensor 9 liegt auf einer ersten Wirkungsachse 11, die eine erste Wirkungsrichtung 13 vorgibt, in der der erste Beschleunigungssensor 9 eine Beschleunigung misst. Der zweite Sensor 10 liegt auf einer zweiten Wirkungsachse 12, die eine zweite Wirkungsrichtung 14 vorgibt, in der der zweite Beschleunigungssensor 10 eine Beschleunigung misst. Die Wirkungsrichtungen 13 und 14 beider Sensoren 9 und 10 sind in einem 90° Winkel 15 zueinander und in einem +45° Winkel 16 und einem -45° Winkel 17 zur horizontalen Ebene 7 angeordnet. Bei vorgegebener 90° Winkellage der beiden Beschleunigungssensoren 9,10 zueinander, bei vorgegebener +45° Winkellage und -45° Winkellage der Sensoren 9, 10 zu der Horizontalen 7 des Radargerätes 2 und Kenntnis der Beschleunigungswerte des Kraftfahrzeugs 1 und der Sensoren 9 und 10 ist ein Höhenwinkel der Beschleunigungssensoren 9 und 10 und damit des Radargerätes 2 zu dem Kraftfahrzeug bestimmbar. Die Vorrichtung 8 weist des Weiteren zumindest einen Mikroprozessor und einen Speicher auf, mittels derer Rechenoperationen durchführbar sind.

Figur 3 zeigt das Radargerät 2 mit einem Höhenwinkelfehler 18, der als φ oder auch als Höhenwinkel bezeichnet ist, in dem Kraftfahrzeug 1 angeordnet. Die horizontale Ebene 7 weicht um den Winkel 18 von der Kraftfahrzeuglängsachse 6 ab.

Ein Beschleunigungssignal des ersten um +45° versetzten Sensors 9 wird mit a1 bezeichnet und entspricht einem Beschleunigungswert oder einem Beschleunigungsvektor 19, der parallel der Wirkungsrichtung 13 liegt. Ein Beschleunigungssignal des zweiten um -45° versetzten Sensors 10 wird mit a2 bezeichnet und entspricht einem Beschleunigungswert oder einem Beschleunigungsvektor 20, der parallel der Wirkungsrichtung 14 liegt. Ein Beschleunigungssignal des Kraftfahrzeuges wird mit aF bezeichnet und entspricht einem Beschleunigungswert oder Beschleunigungsvektor 21 des Kraftfahrzeugs. Die Bezeichnung a1 ist eine Variable und steht wahlweise für oder in Verbindung mit dem Vektor, den Wert oder das Signal des ersten Sensors 9. Die Bezeichnung a2 ist eine Variable und steht wahlweise für oder in Verbindung mit dem Vektor, den Wert oder das Signal des zweiten Sensors 10. Die Bezeichnung aF ist eine Variable und steht wahlweise für oder in Verbindung mit dem Vektor, den Wert oder das Signal für die Beschleunigung des Kraftfahrzeugs 1. Die Beschleunigungswerte a1, a2 und aF werden gleichzeitig ermittelt. Aus einem Kräfteparallelogramm, das sich aufgrund der Vektoren a1, a2 und aF ergibt, lassen sich Gleichungen ableiten:

Der Kosinus aus der Summe des Höhenwinkelfehlers φ addiert mit dem +45° Winkel ist gleich dem Verhältnis des Beschleunigungssignals a1 zu dem Produkt aus dem Korrekturfaktor k multipliziert mit dem Beschleunigungssignal aF. Damit ist eine erste Gleichung beschrieben, die sich wie folgt mathematisch darstellen lässt:

$$\cos(\varphi + 45°) = \frac{a_1}{k * a_F} \qquad (1)$$

Eine korrespondierende zweite Gleichung mit dem -45° Winkel und dem Beschleunigungssignal a2 lässt sich wie folgt beschreiben: Der Kosinus aus der Summe des Höhenwinkelfehlers φ addiert mit dem -45° Winkel ist gleich dem Verhältnis des Beschleunigungssignals a2 zu dem Produkt aus dem Korrekturfaktor k multipliziert mit dem Beschleunigungssignal aF. Die zugehörige zweite Gleichung lässt sich wie folgt mathematisch darstellen:

$$\cos(\varphi - 45°) = \frac{a_2}{k * a_F} \qquad (2)$$

Mit dem Satz des Pythagoras unter Berücksichtigung des Einheitskreises lässt sich aus den Beschleunigungssignalen mittels einer dritten Gleichung der Korrekturfaktor k bestimmen. Die Beschleunigungssignale a1 und a2 werden quadriert, die Quadrate addiert und aus der Summe wird die Wurzel gezogen. Das Wurzelergebnis ist gleich dem Produkt aus dem Korrekturfaktor multipliziert mit dem Fahrzeugbeschleunigungssignal aF. Die zugehörige dritte Gleichung lässt sich wie folgt mathematisch darstellen:

$$\sqrt{a_1^2 + a_2^2} = k * a_F \qquad (3)$$

Die Summe der beiden Beschleunigungssignale a1 und a2 ist gleich dem Produkt aus einem Faktor Wurzel 2 multipliziert mit dem Kraftfahrzeugbeschleunigungssignal aF, dem Korrekturfaktor k und dem Kosinus (φ). Die zugehörige

vierte Gleichung lässt sich wie folgt mathematisch darstellen:

$$a_1 + a_2 = \sqrt{2} * a_F * k * \cos(\varphi) \qquad (4)$$

Des Weiteren ist die Differenz der beiden Beschleunigungssignale a1 und a2 gleich dem Produkt aus einem Faktor Wurzel 2 multipliziert mit dem Kraftfahrzeugbeschleunigungssignal aF, dem Korrekturfaktor k und dem Sinus (φ). Die zugehörige fünfte Gleichung lässt sich wie folgt mathematisch darstellen:

$$a_1 - a_2 = \sqrt{2} * a_F * k * \sin(\varphi) \qquad (5)$$

Aus der dritten Gleichung (3) ist k bestimmbar, aus der vierten Gleichung (4) ist der vertikale Dejustagewinkel φ bestimmbar. Aus der fünften Gleichung (5) ist die Abweichung, englisch auch als Offset bezeichnet, der Sensoren 8 und 9 bestimmbar unter der Annahme, dass φ sehr klein ist. Die zugehörige sechste Gleichung, die das sehr kleine φ definiert, lautet mathematisch:

$$\left| \varphi \right| < 2..5° \qquad (6)$$

## Patentansprüche

1. Verfahren zur Bestimmung eines Höhenwinkelfehlers (16) bei einem Umfeldsensor (2), der an einem Kraftfahrzeug (1) angeordnet ist und zwei Beschleunigungssensoren (9, 10) aufweist, deren Wirkungsrichtungen (13, 14) in einem Winkel (15) von 90° zueinander angeordnet sind und die Wirkungsrichtung (13) des ersten Beschleunigungssensors (9) ist in einem Winkel (16) von +45° und die Wirkungsrichtung (14) des zweiten Beschleunigungssensors (10) ist in einem Winkel (17) von -45° zu einer Horizontalen (7) angeordnet, mit folgenden Verfahrensschritten:

   - ein erster Beschleunigungswert (a1) und ein zweiter Beschleunigungswert (a2) werden von den beiden Sensoren (9, 10) ermittelt,
   - ein dritter Beschleunigungswert (aF) des Kraftfahrzeugs (1) wird ermittelt,
   - mittels zumindest zweier Beschleunigungswerte (a1, a2, aF) wird ein Höhenwinkelfehler (18) des Umfeldsensors (2) ermittelt,
   - der Höhenwinkelfehler (18) wird bei Rechenoperationen berücksichtigt.

2. Verfahren zur Bestimmung eines Höhenwinkelfehlers (16) bei einem Umfeldsensor (2), der an einem Kraftfahrzeug (1) angeordnet ist und zwei Beschleunigungssensoren (9, 10) aufweist, deren Wirkungsrichtungen (13, 14) in einem Winkel (15) von 90° zueinander angeordnet sind und die Wirkungsrichtung (13) des ersten Beschleunigungssensors (9) ist in einem Winkel (16) von +45° und die Wirkungsrichtung (14) des zweiten Beschleunigungssensors (10) ist in einem Winkel (17) von -45° zu einer Horizontalen (7) angeordnet, mit folgenden Verfahrensschritten:

   - ein erster Beschleunigungswert (a1) und ein zweiter Beschleunigungswert (a2) werden von den beiden Sensoren (9, 10) ermittelt,
   - ein dritter Beschleunigungswert (aF) des Kraftfahrzeugs (1) wird ermittelt,
   - mittels zumindest zweier Beschleunigungswerte (a1, a2, aF) wird ein Höhenwinkelfehler (18) des Umfeldsensors (2) ermittelt,
   - aus mehreren horizontalen Schnitten eines Antennendiagramms, die unter verschiedenen vertikalen Winkeln in einem Speicher des Sensors (2) abgelegt sind, wird in Abhängigkeit des Höhenwinkelfehlers (18) ein Antennendiagrammschnitt oder eine Kombination von Antennendiagrammschnitten für Rechenoperationen ausgewählt.

3.  Verfahren zur Bestimmung eines Seitenwinkelfehlers bei einem Umfeldsensor (2), der an einem Kraftfahrzeug (1) angeordnet ist und zwei Beschleunigungssensoren (9, 10) aufweist, deren Wirkungsrichtungen (13, 14) in einem Winkel (15) von 90° zueinander angeordnet sind und die Wirkungsrichtung (13) des ersten Beschleunigungssensors (9) ist in einem Winkel (16) von +45° und die Wirkungsrichtung (14) des zweiten Beschleunigungssensors (10) ist in einem Winkel (17) von -45° zu einer Vertikalen angeordnet, mit folgenden Verfahrensschritten:

    - ein erster Beschleunigungswert (a1) und ein zweiter Beschleunigungswert (a2) werden von den beiden Sensoren (9, 10) ermittelt,
    - ein dritter Beschleunigungswert (aF) des Kraftfahrzeugs (1) wird ermittelt,
    - mittels zumindest zweier Beschleunigungswerte (a1, a2, aF) wird ein Seitenwinkelfehler des Umfeldsensors (2) ermittelt,
    - der Seitenwinkelfehler wird bei Rechenoperationen berücksichtigt.

4.  Verfahren zur Bestimmung eines Seitenwinkelfehlers bei einem Umfeldsensor (2), der an einem Kraftfahrzeug (1) angeordnet ist und zwei Beschleunigungssensoren (9, 10) aufweist, deren Wirkungsrichtungen (13, 14) in einem Winkel (15) von 90° zueinander angeordnet sind und die Wirkungsrichtung (13) des ersten Beschleunigungssensors (9) ist in einem Winkel (16) von +45° und die Wirkungsrichtung (14) des zweiten Beschleunigungssensors (10) ist in einem Winkel (17) von -45° zu einer Vertikalen angeordnet, mit folgenden Verfahrensschritten:

    - ein erster Beschleunigungswert (a1) und ein zweiter Beschleunigungswert (a2) werden von den beiden Sensoren (9, 10) ermittelt,
    - ein dritter Beschleunigungswert (aF) des Kraftfahrzeugs (1) wird ermittelt,
    - mittels zumindest zweier Beschleunigungswerte (a1, a2, aF) wird ein Seitenwinkelfehler des Umfeldsensors (2) ermittelt,
    - aus mehreren vertikalen Schnitten eines Antennendiagramms, die unter verschiedenen horizontalen Winkeln in einem Speicher des Sensors (2) abgelegt sind, wird in Abhängigkeit des Seitenwinkelfehlers ein Antennendiagrammschnitt oder eine Kombination von Antennendiagrammschnitten für Rechenoperationen ausgewählt.

5.  Verfahren nach einem der vorhergehenden Ansprüche 1 bis 4, **dadurch gekennzeichnet, dass** das Beschleunigungssignal (aF) des Kraftfahrzeuges (1) mittels eines Beschleunigungssensors (5) ermittelbar ist.

6.  Verfahren nach einem der vorhergehenden Ansprüche 1 bis 4, **dadurch gekennzeichnet, dass** das Beschleunigungssignal des Kraftfahrzeuges (1) mittels eines Raddrehzahlsensors ermittelbar ist.

7.  Vorrichtung (8) zur Bestimmung eines Höhenwinkelfehlers (16) bei einem Umfeldsensor (2), der an einem Kraftfahrzeug (1) angeordnet ist, **dadurch gekennzeichnet, dass** der Umfeldsensor (2) zwei Beschleunigungssensoren (9, 10) aufweist, deren Wirkungsrichtungen (13, 14) in einem Winkel (15) von 90° zueinander angeordnet sind und die Wirkungsrichtung (13) des ersten Beschleunigungssensors (9) ist in einem Winkel (16) von +45° und die Wirkungsrichtung (14) des zweiten Beschleunigungssensors (10) ist in einem Winkel (17) von -45° zu einer Horizontalen (7) angeordnet.

8.  Vorrichtung (8) nach Anspruch 7, **dadurch gekennzeichnet, dass** ein Speicher des Umfeldsensors (2) mehrere horizontale Schnitte eines Antennendiagramms aufweist, die unter verschiedenen vertikalen Winkeln abgelegt sind.

9.  Vorrichtung (8) zur Bestimmung eines Seitenwinkelfehlers bei einem Umfeldsensor (2), der an einem Kraftfahrzeug (1) angeordnet ist, **dadurch gekennzeichnet, dass** der Umfeldsensor (2) zwei Beschleunigungssensoren (9, 10) aufweist, deren Wirkungsrichtungen (13, 14) in einem Winkel (15) von 90° zueinander angeordnet sind und die erste Wirkungsrichtung (13) des ersten Beschleunigungssensors (9) ist in einem Winkel (16) von +45° und die zweite Wirkungsrichtung (14) des zweiten Beschleunigungssensors (10) ist in einem Winkel (17) von -45° zu einer Vertikalen angeordnet.

10. Vorrichtung (8) nach Anspruch 9, **dadurch gekennzeichnet, dass** ein Speicher des Umfeldsensors (2) mehrere vertikale Schnitte eines Antennendiagramms aufweist, die unter verschiedenen horizontalen Winkeln abgelegt sind.

**Fig. 1**

1

7    2

6    3    4    5

**Fig. 2**

13

11    15    9

2

7    16    8

17

12    10

14

**Fig. 3**

18    16    19    9

2

7    8

6    21    17    20    10

**Europäisches Patentamt**

**EUROPÄISCHER RECHERCHENBERICHT**

Nummer der Anmeldung

EP 07 10 7998

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 1 130 416 A (DENSO CORP [JP]) 5. September 2001 (2001-09-05) * Absatz [0003] * * Absatz [0016] - Absatz [0017] * ----- | 7,9 | INV. G01S7/40 |
| Y | EP 0 769 701 A1 (TEVES GMBH ALFRED [DE] CONTINENTAL TEVES AG & CO OHG [DE]) 23. April 1997 (1997-04-23) * Abbildungen 1,2 * * Seite 3, Zeile 47 - Zeile 51 * ----- | 7,9 | |
| A | DE 10 2004 023106 A1 (CONTI TEMIC MICROELECTRONIC [DE]) 8. Dezember 2005 (2005-12-08) * Absatz [0039]; Abbildung 2 * ----- | 1-4,7,9 | |
| A | DE 43 22 034 A1 (DEUTSCHE AEROSPACE [DE]) 10. Februar 1994 (1994-02-10) * Abbildung 1 * ----- | 1-4,7,9 | |
| A | DE 10 2005 054674 A1 (DENSO CORP [JP]) 24. Mai 2006 (2006-05-24) * Absatz [0018] * * Absatz [0079] * ----- | 1-4,7,9 | RECHERCHIERTE SACHGEBIETE (IPC) G01S G01C G01P |
| A | DE 198 28 440 A1 (HONDA MOTOR CO LTD [JP]) 28. Januar 1999 (1999-01-28) * Abbildung 4A * * Spalte 1, Absatz 43 - Absatz 45 * * Spalte 6, Zeile 49 - Zeile 57 * ----- | 1-4,7,9 | |

Der vorliegende Recherchenbericht wurde für alle Patentansprüche erstellt

| Recherchenort | Abschlußdatum der Recherche | Prüfer |
|---|---|---|
| Den Haag | 4. Oktober 2007 | Niemeijer, Reint |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

# EP 1 873 552 A1

**ANHANG ZUM EUROPÄISCHEN RECHERCHENBERICHT
ÜBER DIE EUROPÄISCHE PATENTANMELDUNG NR.** EP 07 10 7998

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-10-2007

| Im Recherchenbericht angeführtes Patentdokument | | Datum der Veröffentlichung | Mitglied(er) der Patentfamilie | | Datum der Veröffentlichung |
|---|---|---|---|---|---|
| EP 1130416 | A | 05-09-2001 | US | 2001024171 A1 | 27-09-2001 |
| EP 0769701 | A1 | 23-04-1997 | DE | 19538616 A1 | 24-04-1997 |
| DE 102004023106 | A1 | 08-12-2005 | KEINE | | |
| DE 4322034 | A1 | 10-02-1994 | KEINE | | |
| DE 102005054674 | A1 | 24-05-2006 | JP | 2006146372 A | 08-06-2006 |
| | | | US | 2006103927 A1 | 18-05-2006 |
| DE 19828440 | A1 | 28-01-1999 | US | 6087975 A | 11-07-2000 |

EPO FORM P0461

Für nähere Einzelheiten zu diesem Anhang : siehe Amtsblatt des Europäischen Patentamts, Nr.12/82

8

**EP 1 873 552 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19748604 A1